# FASCICULE DE BREVET EUROPEEN

(11) **EP 0 507 679 B1**
(45) Date de publication et mention de la délivrance du brevet: **13.09.1995**
(21) Numéro de dépôt: 92400913.7
(22) Date de dépôt: 01.04.1992
(51) Int. Cl.: F16L 11/12

(54) **Procédé de réalisation en continu d'une structure tubulaire souple comportant une feuille multicouche d'épaisseur micrométrique incorporé et structures tubulaires souples réalisées selon ce procédé**
Verfahren zum kontinuierlichen Herstellen einer weichen, rohrförmigen Struktur, die eine mit einer mikrometrischen Stärke versehene Mehrschichtplatte aufweist und nach dem Verfahren hergestellte, weiche, rohrförmige Strukturen
Process for continuously manufacturing a soft tubular structure having a multi-layer sheet of micrometric thickness and soft tubular structures manufactured according to the process

(30) Priorité: 05.04.1991 FR 9104155
(43) Date de publication de la demande: 07.10.1992
(73) Titulaire: CAOUTCHOUC MANUFACTURE ET PLASTIQUES, F-78000 Versailles (FR)
(72) Inventeur: Derroire, Georges, F-63200 Riom (FR); Ragout, Bernard, F-63170 Aubierre (FR)
(74) Mandataire: Peuscet, Jacques

(56) Documents cités:
- EP-A- 0 051 139
- WO-A-87/00147
- WO-A-91/04432
- US-A- 2 297 413
- US-A- 4 643 927
- US-A- 4 887 647

## Description

L'invention concerne les structures tubulaires souples à base d'élastomères renforcés ou non, servant au transport de fluides liquides, gazeux ou pulvérulents, et leur procédé de fabrication, comprenant la pose d'un film d'épaisseur micrométrique servant de barrière d'étanchéité pour assurer l'imperméabilité aux fluides transportés.

Les structures tubulaires souples de transport de fluides sont le plus souvent fabriquées en grande longueur par des procédés d'extrusions successives alternées avec la constitution des couches de renforcement textile, ou éventuellement métallique, par les procédés de tricotage, guipage de retors ou tressage, usuels dans l'industrie des polymères, aussi bien thermoréticulables que thermoplastiques. Un secteur important de cette industrie emploie des procédés de fabrication utilisant une réticulation par traitement thermique de l'ensemble des constituants polymériques du tuyau, transformation irréversible qui lie des polymères de natures éventuellement différentes grâce à leur affinité chimique.

En service, les pressions des fluides véhiculés, ainsi que les sollicitations dynamiques exercées, déterminent le choix des éléments de renforcement, tandis que l'agressivité chimique ou thermique du fluide et l'environnement extérieur déterminent le choix des matériaux polymériques constituant le tube et le revêtement.

Le domaine concerné est plus précisément celui des tuyaux de petits diamètres, de l'ordre du centimètre, affectés au transfert soit des carburants automobiles modernes - dits oxygénés - à taux d'alcools incorporés, soit des fluides biphasés dans les systèmes réfrigérants. Le liquide véhiculé se comporte comme solvant facilement absorbé par les matériaux usuels constituants des tubes internes des tuyaux.

Les cahiers des charges - par exemple des constructeurs automobiles - définissent pour de tels tuyaux une perméabilité très faible, de l'ordre de quelques grammes par heure et par mètre carré.

Les tubes internes en élastomères courants ou spéciaux, tels que ceux à base de nitrile, présentent des perméabilités dix fois supérieures à celles recherchées. Une couche mince, réalisée sous forme d'un film mince d'un matériau à grande imperméabilité tel que le polyéthylène téréphtalate, est alors un moyen couramment employé, dans l'industrie de l'emballage, et dans celle des tuyaux.

Des fabricants de tuyaux ont ainsi apporté des perfectionnements, par ce moyen, à la construction traditionnelle issue de l'extrusion. Le principe en est décrit dans le document CA 951 259 de GOODALL RUBBER COMPANY, qui, en niant la nécessité d'une adhérence entre constituants, propose de former un film barrière par immersion du tuyau dans un bain de solvant vaporisable. Ce document propose une amélioration de la non-perméabilité aux gaz de pétrole liquéfié (GPL) d'un tube en mélange polyéthylène - butyle par l'utilisation d'un film de polyester.

Ledit film n'est utilisé que pour protéger le renforcement textile, alors externe, sans qu'il soit cherché de liaison entre les constituants.

De même, le document JP-1 152 061 de TOKAI RUBBER INDUSTRY propose d'appliquer la fonction barrière au transport de fluides réfrigérants dans des tubes en caoutchouc halogéné par interposition d'une couche mince de polychlorure de vinylidène protégeant le renforcement par fibres courtes de la couche intermédiaire.

Ce document applique le principe des protections par couches plastiques multiples aux procédés de fabrication traditionnels par extrusion.

Le document JP-1 306 239, de TOKAI RUBBER INDUSTRY également, prévoit un tube de résine polyamide protégé par un mélange de cette résine avec un copolymère de type EVA, sans indications particulières sur la technologie de mise en oeuvre de ces protections multicouches.

Comme le précédent, le document WO-A-91 04432 de PAGUAG propose un tuyau comportant une couche interne enroulée de façon hélicoïdale. Il s'agit, dans l'invention, d'une feuille fine de plastique fluoré. Pour assurer la liaison des lés de la couche en plastique fluoré et des couches adhésives qui l'entourent, il est procédé à un premier traitement thermique à la température de fusion du plastique, un deuxième traitement thermique venant, ultérieurement, assurer la vulcanisation des élastomères constitutif et la liaison des différents constituants entre eux. Cette réalisation nécessite donc l'emploi de deux traitements thermiques.

Le document EP-A-0 051 139 de EATON CORPORATION concerne un tube et un revêtement de cables électriques munis d'une barrière d'étanchéité aux gaz et à l'humidité, constituée d'un ruban de métal revêtu d'un copolymère d'éthylène avec un monomère à groupe carboxyle réactif.. Ladite barrière peut être disposée par pose longitudinale, ca qui ne pose pas de problème particulier en raison de sa nature métallique qui lui confère du corps et de son épaisseur qui n'est pas micrométrique.

Au contraire, le document JP-1 259 944 de KURARAY indique un procédé de fabrication par enroulement spiralé de films minces autour d'un tube de transport de propane ou de fluides de conditionnement d'air, les films pouvant être en copolymères d'éthylène et d'alcool polyvinylique (EVOH) ou en polyéthylène téréphtalate (PET). Le document porte sur les rapports dimensionnels des rubans constituant ces films, et le taux de leur recouvrement, sans s'intéresser à la liaison entre les composants.

Enfin, le document US 3 927 695 de UNION CARBIDE applique le perfectionnement d'un film barrière à un tube en élastomère de silicone réticulé par vulcanisation à l'air chaud et supporté, lors de sa confection, par un mandrin. La superposition des renforcements est assurée par enroulements spiralés et l'étanchéité est achevée par spiralage d'un film de polyéthylène téréphtalate.

Ce film est rendu adhésif et utilisable sur des machines d'enroulement à grande vitesse par revêtement superficiel au moyen d'un mélange d'une triazine oléfinique et de caoutchouc, dont le traitement thermique ultérieur permet la liaison entre le tube de silicone et le film de polyéthylène téréphtalate, normalement non adhérents.

Diverses variantes sont proposées pour combiner le film barrière de polyéthylène téréphtalate, revêtu d'un mélange de siloxane et de triazine, à des tubes en élastomère de silicone, constitués, dans tous les cas, par des superpositions d'enroulements spiralés de couches calandrées.

La constitution de tels multicouches est réalisée sur un mandrin rigide, tournant, permettant la fabrication, à grande vitesse en ce qui concerne l'opération d'enrubannage.

L'opération présente l'inconvénient d'être discontinue et de ne porter que sur une longueur limitée, pour tous les exemples cités dans ledit document.

Les documents précédents décrivent donc différentes solutions incorporant, dans des tuyaux, des films quasi-imperméables aux fluides véhiculés, mais aucune des solutions proposées ne permettrait d'atteindre les valeurs actuelles des cahiers des charges en vigueur - particulièrement dans l'industrie automobile - et ce, en raison, soit de l'absence d'adhérence intime entre les constituants qui laisse place à la diffusion des fluides entre lesdits constituants ou à un "effet mêche" du renforcement, facilitant la pénétration du fluide, dès que le tube interne présente la moindre porosité, soit à une efficacité modérée des films utilisés comme élément barrière, qui nécessite une épaisseur non négligeable.

De plus, l'examen de l'art antérieur montre que si le principe de constitution d'un film barrière au sein des constituants d'un tuyau souple est bien posé, par contre, une technique de fabrication en continu, ne nécessitant pas la constitution discontinue d'une ébauche, mais qui assure une adhérence intime des constituants, n'est pas connue.

L'invention concerne non seulement la réalisation de tuyaux souples mais également celle de toute structure tubulaire souple, telle que, à titre d'exemple non limitatif, les compensateurs de dilatation ou les cables électriques gainés, devant présenter une étanchéité soit aux fluides véhiculés soit aux agressions extérieures, telles celles de l'oxygène ou de l'ozone.

L'objet de l'invention est un procédé de fabrication en continu, associé aux procédés usuels de l'industrie des polymères, permettant l'incorporation dans une structure tubulaire souple et la liaison intime aux autres constituants, au cours de la fabrication, d'un feuil multicouche d'épaisseur micrométrique formant barrière de perméabilité aux fluides véhiculés, ledit feuil multicouche d'épaisseur micrométrique étant constitué d'un feuil barrière de matériau polymérique présentant un très faible indice de perméabilité, adhérent à un feuil de contact ou en sandwich entre deux feuils de contact - de même nature ou de natures différentes - présentant, eux, une affinité pour les constituants en regard, afin que s'établisse une liaison physico-chimique intime entre tous les constituants de la structure tubulaire souple, ledit feuil multicouche restant d'épaisseur micrométrique.

L'invention porte également sur la structure tubulaire souple réalisée selon ledit procédé.

L'invention est donc un procédé de réalisation de structure tubulaire souple constituée d'un tube interne, éventuellement d'une armature de renforcement et d'un revêtement extérieur et qui comporte, en outre, une barrière d'étanchéité soit aux fluides véhiculés soit aux agents agressifs extérieurs, ladite barrière d'étanchéité, étant constituée d'un feuil multicouche d'épaisseur micrométrique comprise entre 15 et 40 micromètres, polymérique, et disposée longitudinalement, de manière continue, sous forme de ruban, pour former un enveloppage dont le recouvrement des lés est parallèle aux génératrices de ladite structure tubulaire souple, ledit feuil multicouche d'épaisseur micrométrique étant scellable sur lui-même, sa fermeture étant assurée par la superposition étanche de ses faces sur la surface dudit recouvrement, et ledit recouvrement des lés se faisant sur une longueur circonférentielle au plus égale à la valeur du diamètre nominal de ladite structure tubulaire souple et sensiblement égale à deux cents fois l'épaisseur dudit feuil multicouche d'épaisseur micrométrique, un traitement thermique final, unique, venant assurer la liaison intime de tous les éléments constitutifs de ladite structure tubulaire souple.

Le feuil multicouche d'épaisseur micrométrique est constitué d'au moins un feuil barrière, destiné à assurer la fonction étanchéité et d'au moins un feuil de contact destiné à assurer, d'une part la cohésion du feuil multicouche d'épaisseur micrométrique lui-même et, d'autre part, la liaison avec les éléments de la structure tubulaire souple avec lesquels il est en contact.

L'invention porte également sur les structures tubulaires souples, telles que les tubes, les tuyaux, les gaines ou les compensateurs de dilatation, comportant une barrière d'étanchéité aux fluides véhiculés ou aux agents agressifs extérieurs, réalisées selon le procédé objet de l'invention.

Le feuil multicouche d'épaisseur micrométrique formant barrière d'étanchéité présente une épaisseur comprise entre 15 et 40 micromètres, le feuil barrière ayant une épaisseur préférentiellement comprise entre 10 et 30 micromètres et le feuil de contact ayant une épaisseur préférentiellement comprise entre 3 et 5 micromètres.

La nature du feuil barrière est fonction de celle du fluide véhiculé ou de l'agent agressif extérieur. En général, par exemple, les feuils barrière présentant une bonne imperméabilité à la vapeur d'eau sont assez perméables aux gaz, à l'exception du polychlorure de vinylidène présentant, lui, une excellente imperméabilité aux deux.

Les polymères les plus efficaces pour leurs propriétés de barrière sont, pour l'imperméabilité aux gaz, les polymères de chloroéthylène, le polyéthylène téréphtalate, les copolymères éthylène/alcool polyvinylique, les polyamides ou copolyamides, alors que pour l'imperméabilité à la vapeur d'eau, ce sont, outre le polychlorure de vinylidène et le polyéthylène téréphtalate, le polychlorotrifluoroéthylène, le polypropylène orienté, les polyoléfines haute et basse densités; l'imperméabilité aux hydrocarbures en général et, plus particulièrement, aux carburants modernes est encore plus difficile a assurer. Parmi les polymères offrant les meilleures propriétés de barrière, peuvent être cités les polyamides 11 et 12, le polyéthylène réticulable et le polyéthylène téréphtalate.

Le feuil de contact, lui, doit présenter des qualités d'affinité au feuil barrière, d'une part, une possibilité d'adhérence - après traitement approprié - aux composants des éléments constitutifs de la structure tubulaire souple avec lesquels il se trouve en contact et il doit, en outre, être scellable sur lui-même.

Pour la réalisation du feuil de contact, sont préférablement sélectionnés, les polymères de chloroéthylène, les copolymères éthylène/alcool vinylique, les polyoléfines traités ou les copolymères oléfiniques.

Le feuil multicouche d'épaisseur micrométrique est réalisé par enduction, par coextrusion généralement associée au soufflage, ou par co-injection.

Les particularités de l'invention, ainsi que ses variantes, seront mieux comprises à la lecture de la description accompagnant les dessins, dans lesquels :
- la figure 1 représente la coupe d'une structure tubulaire souple réalisée selon le procédé objet de l'invention ;
- la figure 2 illustre la constitution de deux articles tubulaires souples, un tube et un tuyau, comportant une barrière d'étanchéité intégrée ;
- la figure 3 décrit un exemple de feuil multicouche d'épaisseur micrométrique constituant une barrière d'étanchéité à intégrer dans la paroi d'une structure tubulaire souple ;
- la figure 4 représente la coupe d'un compensateur de dilatation comportant une barrière d'étanchéité au contact du fluide véhiculé ;
- la figure 5, décrit, à partir d'un exemple, la constitution de feuils multicouches d'épaisseur micrométrique utilisables en paroi interne de structures tubulaires souples.

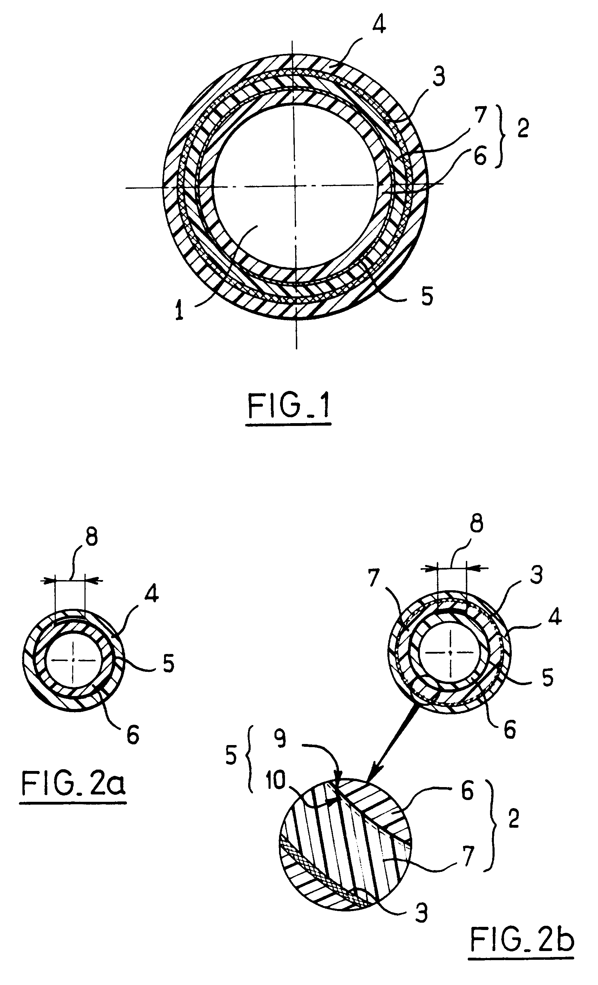

La figure 1 représente la coupe d'une structure tubulaire souple réalisée selon le procédé objet de l'invention.

La zone de transfert du fluide (1) est définie par le diamètre interne de la structure tubulaire souple et est confinée par le tube interne (2). La résistance à la pression est assurée par l'armature de renforcement (3), posée par tricotage, guipage ou tressage au-dessus du tube interne (2), réalisé par extrusion et elle est protégée, contre les agressions externes, par le revêtement (4).

Cependant, la porosité du matériau élastomérique constituant usuellement le tube interne (2) laisse au fluide véhiculé la latitude d'atteindre par migration, interne audit matériau élastomérique, l'armature de renforcement (3) pour y provoquer différents dégats : à la fois une détérioration des caractéristiques mécaniques du matériau de renforcement, une perte des performances intrinsèques de la structure tubulaire souple elle-même par désolidarisation entre constituants, ou encore une imprégnation du revêtement (4), au point de provoquer odeurs et pollution de l'environnement, ou même risque d'inflammation pour un carburant. En vue de remédier à l'ensemble de ces insuffisances et de ces risques, une barrière d'étanchéité (5) est interposée entre la paroi intérieure et l'armature de renforcement (3) de la structure tubulaire souple.

La barrière d'étanchéité (5) est représentée incorporée, par exemple à mi-épaisseur, au sein du tube interne (2), le séparant ainsi en une couche au contact du fluide véhiculé, formant une robe intérieure (6) et, autour de la barrière d'étanchéité (5), en une autre couche, dite tube de liaison (7), parfaitement protégée de toute imprégnation par le fluide véhiculé. Ledit tube de liaison (7) assure la liaison mécanique entre le tube interne (2) et l'armature de renforcement (3). Ainsi représentée, la construction de la structure tubulaire souple suppose autant d'extrusions que de couches successives réalisées au moyen d'extrudeuses adaptées, déposant une couche supplémentaire sur l'ébauche de grande longueur réalisée au stade antérieur. L'ébauche, à chaque stade, est portée ou sur une succession de tringles rigides ou sur un mandrin souple ou encore sur un simple tube suffisamment rigidifié pour accepter les extrusions ultérieures. La robe intérieure (6) peut éventuellement être réduite au simple revêtement intérieur du feuil multicouche d'épaisseur micrométrique constituant la barrière d'étanchéité (5), qui doit être intimement liée, par adhérisation au cours du traitement thermique, aux matériaux polymériques du tube de liaison (7) et de ladite robe intermédiaire (6).

La même liaison mécanique, obtenue par voie physico-chimique, sous l'effet de l'apport de chaleur, est nécessaire pour la cohésion entre ledit tube de liaison (7) et le revêtement (4), à travers la constitution textile de l'armature de renforcement (3). Si celle-ci est constituée de plusieurs épaisseurs, par exemple de deux couches guipées enroulées hélicoïdalement en sens opposés, une couche de liaison (non représentée), présentant de bonnes qualités mécaniques, peut être interposée entre lesdites couches de l'armature de renforcement (3). Le polymère de base de ladite couche de liaison (7) doit alors, nécessairement, être protégé de toute migration du fluide véhiculé à travers le tube interne (2), justifiant encore plus, ainsi, le rôle du feuil multicouche d'épaisseur micrométrique assurant la fonction barrière d'étanchéité (5).

La figure 2 est formée de deux schémas exposant la constitution de deux articles tubulaires souples à barrière d'étanchéité intégrée : en vue 2a un tube, c'est à dire un tuyau dépourvu d'armature de renforcement, en vue 2b un tuyau souple comportant, donc, une armature de renforcement (3), par exemple textile.

Les deux types d'articles sont constitués, au contact du fluide véhiculé, par une robe intérieure (6), qui peut être réalisée, à titre d'exemple non limitatif, en une composition polymérique à base d'un mélange de caoutchouc nitrile et de polychlorure de vinyle. La barrière d'étanchéité (5) est réalisée par enveloppage, avec un recouvrement des lés (8) d'une longueur circonférentielle au plus égale à la valeur du diamètre nominal.

A titre d'exemple non limitatif, et en raison du fait que ladite barrière d'étanchéité (5) est, ici, intégrée au tube interne (2), le feuil multicouche d'épaisseur micrométrique qui la constitue est avantageusement composé d'un feuil barrière (9) - en polyéthylène téréphtalate -, pris en sandwich entre deux feuils de contact (10) - en chlorure de polyvinylidène -, ce dernier matériau étant capable de se souder sur lui-même dans la zone de recouvrement des lés (8) après avoir reçu la couche extrudée ultérieurement constituant le tube de liaison (7) ou le revêtement (4).

Les épaisseurs relatives du feuil multicouche d'épaisseur micrométrique d'une part et de la robe intérieure (6) et du tube de liaison (7) entre lesquels il est inséré, d'autre part, ont pour effet de compenser les différences notables de modules élastiques desdits composants dans les déformations, en service, de la structure tubulaire souple. Grâce à la parfaite adhérence entre le feuil multicouche d'épaisseur micrométrique et les matériaux de module de déformation beaucoup plus faible qui l'entourent, la barrière d'étanchéité (5) a la possibilité de se plisser ou de former des ondulations pour suivre, sans risque, les déformations subies, au cours de son utilisation, par ladite structure tubulaire souple.

Dans un exemple non limitatif, le feuil barrière (9) présente une épaisseur de 25 micromètres, l'épaisseur des feuils de contact (10) étant de 3 à 5 micromètres. Le recouvrement des lés (8) est de 8 à 10 millimètres et les épaisseurs du tube interne (2) et du revêtement (4) de 3 millimètres pour un diamètre de passage du fluide véhiculé de 12 millimètres.

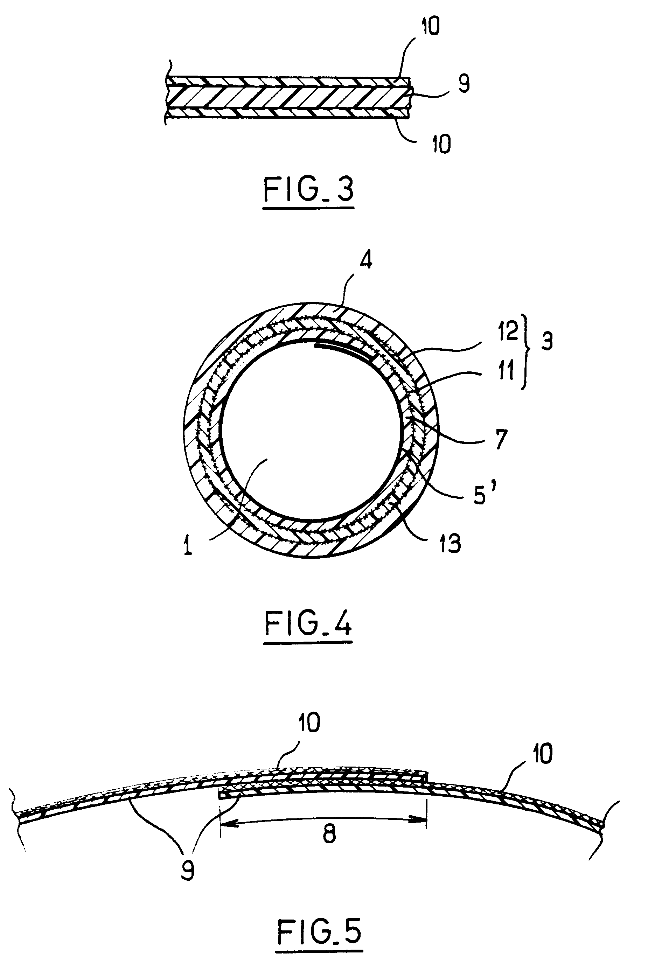

La figure 3 est le schéma constitutif du feuil multicouche d'épaisseur micrométrique qui, pour l'exemple dimensionnel cité, est utilisé en ruban de largeur 45 millimètres, posé longitudinalement.

A titre d'exemple non limitatif, le feuil barrière (9) est préférentiellement constitué de polyéthylène téréphtalate et présente avantageusement une épaisseur de 10 à 30 micromètres.

Il reçoit un traitement physique et ou/chimique de préparation pour assurer son adhérence, grâce à une enduction par une dissolution de polychlorure de vinylidène déposant, sur chaque face, une couche de 3 à 5 micromètres formant les feuils de contact (10) et permettant, après séchage, les manipulations ultérieures du feuil multicouche d'épaisseur micrométrique.

Une aptitude particulière du polychlorure de vinylidène est d'assurer une adhésion parfaite sur d'autres polymères, tels que le caoutchouc nitrile ou nitrile hydrogéné, les mélanges de caoutchouc nitrile et de polychlorure de vinyle, par exemple, au cours d'un traitement thermique aux environs de 140 à 180°C. Outre cette affinité aux polymères voisins, le polychlorure de vinylidène présente, à ces températures, la faculté de se sceller sur lui-même, ce qui permet la réalisation d'un enveloppage continu, avec recouvrement de section droite constante, du fait que les faces interne et externe du feuil de contact (10) se trouvent alors confondues. Le recouvrement des lés (8) relie donc à lui-même le feuil barrière (9) en polyéthylène téréphtalate de module élevé, sur une largeur de l'ordre de mille fois l'épaisseur du feuil de contact (10), soit environ deux cent fois l'épaisseur du feuil multicouche d'épaisseur micrométrique.

La liaison intime avec les polymères du tube interne (2) qui l'entourent, autorise, par le module de déformation plus bas desdits composants, les flexions mécaniques de la structure tubulaire souple sur les rayons usuels.

L'aplatissement, en service, de la structure tubulaire souple est évité du fait de l'épaisseur notable des polymères constitutifs du tube interne (2).

Dans les déformations locales, en service, la liaison intime due à l'adhérisation est indispensable pour éviter la désolidarisation entre composants de déformabilité différente, désolidarisation qui pourrait se traduire par des cheminements longitudinaux du fluide véhiculé à partir d'un défaut local, jusqu'à atteindre l'armature de renforcement (3) ou le revêtement (4) par porosité audelà du point faible.

La figure 4 est la coupe d'une structure tubulaire souple telle que la partie cylindrique d'un manchon compensateur de dilatation pour canalisations industrielles, entre ses brides de fixation rigides.

La résistance dudit manchon compensateur de dilatation à la pression de l'installation est assurée par une pluralité de couches d'armatures de renforcement (3), par exemple textiles, représentées, ici, au nombre de deux. Une couche intérieure (11), en contact intime avec le tube de liaison (7) et une couche extérieure (12), en contact intime également avec le revêtement (4), sont reliées mécaniquement par une gomme de liaison (13), dont l'adhérence à travers ces couches d'armatures de renforcement (3) aux polymères qui les entourent est garante de la cohésion de l'ensemble, après traitement thermique. L'étanchéité de haut niveau est ici assurée par la présence, à la partie interne dudit manchon compensateur de dilatation, d'une barrière d'étanchéité (5′), intimement liée au tube de liaison (7), par la superposition au feuil barrière (9) du feuil de contact (10), l'ensemble formant le feuil multicouche d'épaisseur micrométrique, ici disposé au contact du fluide transporté.

La figure 5 peut être considérée comme un agrandissement de la figure 4, montrant le détail du feuil multicouche d'épaisseur micrométrique formant barrière d'étanchéité (5′), au contact du fluide transporté. A titre d'exemple non limitatif, le feuil barrière (9) peut être réalisé en polyéthylène de haute densité, le feuil de contact (10) étant alors constitué d'un film en composition élastomérique compatible, pour assurer la liaison avec le matériau constitutif du tube de liaison (7). Une préparation physicochimique permet, en effet, la réalisation d'une liaison intime entre le polyéthylène de haute densité et la composition polymérique, au cours d'un calandrage en couche mince.

Le recouvrement des lés (8) assure, malgré un rapport des modules de déformation qui peut dépasser 100, une liaison mécanique sur toute la surface entre les deux lés du feuil barrière (9), séparés par une couche du feuil de contact (10), dont il est revêtu sur l'une de ses faces. Le fluide véhiculé n'est ainsi en contact qu'avec le matériau du feuil barrière (9), et l'adhérence intime avec le polymère du tube de liaison (7) permet les déformations mécaniques de l'ensemble de la structure tubulaire souple servant, par exemple, de manchon compensateur de dilatation entre éléments rigides de canalisations industrielles.

A titre d'illustration, sont donnés ci-après quelques ordres de grandeur des perméabilités que présentent les feuils barrières (9) et les feuils de contact (10), selon la nature de l'agent auquel le feuil multicouche d'épaisseur micrométrique doit assurer l'étanchéité. Parmi les polymères de chloroéthylène, le polychlorure de vinylidène présente la meilleure imperméabilité aux gaz et, plus particulièrement à l'oxygène, pour lequel, à température ambiante et 0 % d'humidité relative, sa perméabilité est de 2 à 25 centimètres cube par mètre carré de surface, l'épaisseur étant ramenée à 1 micromètre et sous une différentielle de pression de 1 bar.

Dans les mêmes conditions, la perméabilité aux gaz d'un feuil de copolymère d'éthylène et d'alcool vinylique est de l'ordre de 4 à 60 centimètres cube, celle du polyéthylène téréphtalate étant de l'ordre de 1500 centimètres cube et celle du polyamide 6 d'environ 2000 centimètres cube.

La perméabilité à la vapeur d'eau, mesurée à 40 °C et 90 % d'humidité relative, pour un micromètre d'épaisseur et par mètre carré de surface du feuil est, au plus, de 80 grammes pour les polymères de chloroéthylène dont le polychlorure de vinylidène, de 15 grammes environ pour le polychlorotrifluoroéthylène et compris entre 150 et 600 grammes, dans les mêmes conditions, pour les polyoléfines.

Mesurée selon les conditions des cahiers des charges des constructeurs d'automobiles, la perméabilité aux hydrocarbures présente les valeurs expérimentales suivantes, exprimées en grammes par heure et par mètre carré de feuil : 0,15 gramme pour un feuil de polyéthylène téréphtalate d'une épaisseur de 12 micromètres, 1 gramme pour un feuil de polyamide-11 de 400 micromètres d'épaisseur (alors que cette valeur est de 1,6 grammes pour un feuil de polyamide-12 de 320 micromètres d'épaisseur) et elle est de 58 grammes pour un feuil de polyéthylène réticulé de 100 micromètres d'épaisseur.

Bien que l'imperméabilité d'un feuil multicouche ne puisse être considérée comme résultant strictement de l'additivité directe de l'imperméabilité des feuils unitaires qui le composent, les meilleures barrières d'étanchéité sont obtenues par réalisation de complexes multicouches associant des feuils unitaires de natures polymériques différentes.

Dans de tels feuils multicouches, le feuil barrière (9) est, le plus généralement, constitué de polyéthylène téréphtalate - orienté ou non -, de copolymère d'éthylène et d'alcool vinylique, de polypropylène orienté ou encore de polymères de chloroéthylène tel le polychlorure de vinylidène. Le feuil de contact (10) est, le plus souvent, constitué de polyoléfine - polyéthylène ou polypropylène - éventuellement orienté ou réticulable, ou encore de polychlorure de vinylidène, matériaux polymériques scellables ou soudables.

Afin de donner, sous une forme synthétique, quelques exemples d'associations préférentielles entre feuil barrière (9) et feuil de contact (10), seront désigné par
- PET,: le polyéthylène téréphtalate,
- PE,: le polyéthylène
- PP,: le polypropylène,
- OPP,: le polypropylène orienté,
- PEBD,: le polyéthylène basse densité,
- PEHD,: le polyéthylène haute densité,
- EVA,: les copolymères éthylène/acétate de vinyle,
- PA,: les polyamides,
- PVC,: le polychlorure de vinyle,
- PVDC,: le polychlorure de vinylidène,
- EVOH,: les copolymères éthylène/alcool vinylique.

Ainsi, les associations préférentielles des feuils barrière (9) et des feuils de contact (10), pour constituer un feuil multicouche d'épaisseur micrométrique formant barrière d'étanchéité (5) ou (5′) peuvent être représentés par :
PET/PVDC, PEBD/PVDC, PA/PE ou PP, PEBD/EVA, PE/PVDC, EVOH/PEHD, pour les complexes à deux feuils, PE ou PP/PVDC/PE ou PP, PE ou PP/EVOH/PE ou PP, PVC/PE/PVC PVDC/OPP/PVDC, PVDC/PET/PVDC, pour les complexes à trois feuils.

Il est également possible de constituer, à partir des polymères précédemment cités, des feuils multicouches d'épaisseur micrométrique à trois feuils dissymétriques ou même des assemblages comportant 4 ou 5 voire 6 feuils associés.

Parmi les associations possibles, présentent la meilleure étanchéité aux gaz les feuils multicouches d'épaisseur micrométrique PE/PVDC, PA/PE, EVA/PE/PET/PVDC, la meilleure étanchéité à la vapeur d'eau les complexes PA/PE/PVC/PVDC ou EVA/PA/PP ou PE et la meilleure étanchéité aux hydrocarbures les feuils PET/PVDC ou PVDC/PET/PVDC ou encore PA/PE.

Pour réaliser le feuil multicouche d'épaisseur micrométrique, les procédés usuels consistent à traiter le feuil barrière (9) fabriqué, lui, selon les techniques classiques d'extrusion ou de calandrage, suivies d'une découpe en rubans à la largeur optimale pour l'application.

Le feuil barrière (9) est traité, en grande largeur ou sous sa forme ruban, par exemple par enduction en phase liquide par le matériau polymérique constitutif du feuil de contact (10), tel, à titre d'exemple non limitatif, un polymère de chloroéthylène et, particulièrement, le polychlorure de vinylidène, avec évaporation immédiate du solvant. Le ruban multicouche séché et refroidi peut être enroulé sans collage sur lui-même jusqu'à sa mise en oeuvre.

La mise en oeuvre du feuil multicouche d'épaisseur micrométrique, pour former la barrière d'étanchéité (5) sur une structure tubulaire souple dont la fabrication est par ailleurs classique, vient s'interposer, après l'éventuelle constitution d'une robe intérieure (6) sur un mandrin rigide ou souple, par exemple par extrusion suivie d'un refroidissement.

Un guide conique fait passer le feuil multicouche d'épaisseur micrométrique de la forme plane à la forme cylindrique enveloppant, en continu, l'ébauche de la structure tubulaire souple, avec une progressivité de l'angle suffisante pour éviter toute déformation. Un freinage contrôlé de la bobine portant ce feuil multicouche d'épaisseur micrométrique est le paramètre essentiel asservissant le déroulement de la bobine à la vitesse de défilement de la structure tubulaire souple en cours de confection. Le recouvrement des lés (8) est nécessaire et se trouve confiné par l'entrée ultérieure de l'ébauche continue dans une extrudeuse qui pose le tube de liaison (7), sous une pression élevée, lors de la traversée de la tête d'extrusion. Après tricotage, tressage ou guipage hélicoïdal des couches de l'armature de renforcement (3), l'ébauche intermédiaire ainsi constituée de la structure tubulaire souple reçoit le revêtement (4) selon un procédé semblable.

Suivant le type de support servant éventuellement de mandrin, l'ébauche de la structure tubulaire souple est, alors, ou coupée à la longueur des tiges servant de mandrins rigides et conformée, ou enroulée grâce à l'emploi d'un mandrin flexible sur des bobines, afin d'être introduite, pour traitement thermique, dans un autoclave de dimensions appropriées, ou encore soumise au traitement thermique, de manière continue, par exemple par passage dans un bain de sel ou dans un tunnel à haute fréquence.

En résumé, le procédé objet de l'invention comprend, pour la réalisation de la structure tubulaire souple représentée, les étapes successives suivantes :
- extrusion de la robe intérieure (6), généralement sur un mandrin ;
- pose du feuil multicouche d'épaisseur micrométrique avec recouvrement des lés (8) parallèle à l'axe de la robe intérieure (6), ledit feuil multicouche d'épaisseur micrométrique étant soit constitué, antérieurement, sur un matériel indépendant, soit réalisé simultanément ;
- extrusion du tube de liaison (7), au dessus du film multicouche d'épaisseur micrométrique ;
- tricotage, guipage ou tressage de la première couche de l'armature de renforcement (3), par une tricoteuse, une guipeuse ou une tresseuse, au dessus du tube de liaison (7) ;
- dépôt éventuel, par pulvérisation par exemple, d'un agent d'adhérisation sur la première couche de l'armature de renforcement (3) ;
- tricotage, guipage ou tressage éventuel de la deuxième couche de l'armature de renforcement (3) au dessus de la couche formée par l'agent d'adhérisation ;
- extrusion du revêtement (4) au dessus de l'armature de renforcement (3) ;
- traitement thermique final sous pression destiné à assurer la liaison intime de l'ensemble des éléments constitutifs de la structure tubulaire souple, robe intérieure (6), feuil multicouche d'épaisseur micrométrique formant la barrière d'étanchéité (5), tube de liaison (7), armature de renforcement (3) et son agent d'adhérisation et revêtement (4);
- détringlage de la structure tubulaire souple, après son refroidissement.

Tous ces procédés ont en commun la mise en oeuvre de techniques opérant en continu, sur des longueurs se comptant en centaines de mètres, les composants devant se présenter à l'assemblage de façon ininterrompue.

Le procédé de réalisation d'une structure tubulaire souple à barrière d'étanchéité incorporée, selon l'invention, présente les avantages suivants :
- il s'intègre aisément dans une fabrication classique, par incorporation d'un poste de pose du feuil multicouche d'épaisseur micrométrique formant barrière d'étanchéité, sans modifier les techniques permettant de réaliser, sur les mêmes moyens, d'autres types de structures tubulaires souples ;
- il permet, par simple changement de constitution du feuil multicouche d'épaisseur micrométrique, de satisfaire éventuellement des cahiers des charges différents pour des applications véhiculant des fluides différents ou pour assurer une protection contre les agents agressifs externes ;
- il permet le choix d'armatures de renforcement indépendemment de leur compatibilité avec les fluides transportés ;
- il reporte, de manière économique, sur le feuil multicouche d'épaisseur micrométrique, la fonction étanchéité jusqu'alors exigée du matériau constitutif du tube interne de la structure tubulaire souple ;
- il est compatible avec des procédés de conformage sur mandrins souples donnant des formes non rectilignes après traitement thermique des ébanches.

## Revendications

1. Procédé de réalisation d'une structure tubulaire souple composée d'un tube interne (2), éventuellement d'une armature de renforcement (3) et d'un revêtement (4) et comportant, en outre, une barrière d'étanchéité (5), (5') aux fluides véhiculés ou aux agents agressifs extérieurs, ladite barrière d'étanchéité (5), (5'), étant constituée d'un feuil multicouche d'épaisseur micrométrique comprise entre 15 et 40 micromètres, polymétrique, et disposée longitudinalement, de manière continue, sous forme de ruban, pour former un enveloppage dont le recouvrement des lés (8) est parallèle aux génératrices de ladite structure tubulaire souple, ledit feuil multicouche d'épaisseur micrométrique étant scellable sur lui-même, sa fermeture étant assurée par la superposition étanche de ses faces sur la surface dudit recouvrement, et ledit recouvrement des lés (8) se faisant sur une longueur circonférentielle au plus égale à la valeur du diamètre nominal de ladite structure tubulaire souple et sensiblement égale à deux cents fois l'épaisseur dudit feuil multicouche d'épaisseur micrométrique, un traitement thermique final, unique, venant assurer la liaison intime de tous les éléments constitutifs de ladite structure tubulaire souple.

2. Procédé de réalisation d'une structure tubulaire souple selon la revendication 1, caractérisé en ce que ledit feuil multicouche d'épaisseur micrométrique formant la barrière d'étanchéité (5') est disposé, en continu, sur la surface libre du tube interne (2), le feuil barrière (9) dudit feuil multicouche d'épaisseur micrométrique constituant, de ce fait, la robe intérieure (6) de ladite structure tubulaire souple.

3. Procédé de réalisation d'une structure tubulaire souple selon la revendication 1, caractérisé en ce que ledit feuil multicouche d'épaisseur micrométrique est disposé, en continu, entre une robe intérieure (6) et un tube de liaison (7), dont l'ensemble constitue le tube interne (2).

4. Procédé de réalisation d'une structure tubulaire souple selon la revendication 3, caractérisé en ce que la robe intérieure (6) et le tube de liaison (7) ont sensiblement la même épaisseur, le feuil multicouche d'épaisseur micrométrique étant disposé au voisinage de la demi-épaisseur du tube interne (2).

5. Structure tubulaire souple réalisée conformément au procédé selon la revendication 1, caractérisé en ce que le feuil multicouche d'épaisseur micrométrique formant la barrière d'étanchéité (5) est constitué d'au moins un feuil barrière (9), assurant la fonction d'étanchéité, et d'au moins un feuil de contact (10), assurant la fonction de liaison avec ledit feuil barrière (9) d'une part et avec les éléments constitutifs de la structure tubulaire souple qui l'entourent, d'autre part.

6. Structure tubulaire souple selon la revendication 5, caractérisé en ce que le feuil multicouche d'épaisseur micrométrique formant la barrière d'étanchéité (5) est constitué d'un feuil barrière (9) associé à un feuil de contact (10).

7. Structure tubulaire souple selon la revendication 5, caractérisé en ce que le feuil multicouche d'épaisseur micrométrique formant la barrière d'étanchéité (5) est constitué d'un feuil barrière (9) pris en sandwich entre deux feuils de contact (10).

8. Structure tubulaire souple selon l'une des revendications 5 à 7, caractérisé en ce que l'épaisseur du feuil barrière (9) est comprise entre 10 et 30 micromètres, celle du feuil de contact (10) étant comprise entre 3 et 5 micromètres.

9. Structure tubulaire souple selon l'une des revendications 5 à 8, caractérisé en ce que le feuil barrière (9) est constitué de polyéthylène téréphtalate, le feuil de contact (10) étant réalisé en polychlorure de vinylidène.

10. Tuyau souple pour transport de fluides liquides ou gazeux comportant une barrière d'étanchéité (5) ou (5'), constituée d'un feuil multicouche d'épaisseur micrométrique, polymérique, caractérisé en ce que ledit tuyau souple présente une structure conforme à l'une des revendications 5 à 9.

11. Manchon compensateur de dilatation pour canalisations industrielles comportant une barrière d'étanchéité (5) ou (5'), constituée d'un feuil multicouche d'épaisseur micrométrique, polymérique, caractérisé en ce que ledit manchon compensateur de dilatation présente une structure conforme à l'une des revendications 5 à 9.

## Claims

1. A process for producing a flexible tubular structure composed of an inner tube (2), optionally a reinforcement (3) and a covering (4) and further comprising a sealing barrier (5), (5') to the fluids conveyed or to external aggressive agents, said sealing barrier (5), (5') being constituted by a multilayer polymeric film of micrometric thickness comprised between 15 and 40 microns, arranged longitudinally and continuously, in the form of a ribbon, to form a wrapper, the overlapping of the breadths (8) of which is parallel to the generating lines of said flexible tubular structure, said multilayer film of micrometric thickness being self-sealing, being closed by the impermeable superimposition of its faces over the surface area of said overlap, and said overlapping of the breadths (8) taking place over a circumferential length equal at most to the value of the nominal diameter of said flexible tubular structure and substantially equal to two hundred times the thickness of said multilayer film of micrometric thickness, a single final heat treatment ensuring the intimate connection of all the constituent elements of said flexible tubular structure.

2. A process for producing a flexible tubular structure according to Claim 1 characterised in that said multilayer film of micrometric thickness forming the sealing barrier (5') is disposed continuously over the free surface of the inner tube (2), the barrier film (9) of said multilayer film of micrometric thickness hence constituting the inner covering (6) of said flexible tubular structure.

3. A process for producing a flexible tubular structure according to claim 1, characterised in that said multilayer film of micrometric thickness is disposed continuously between an inner covering (6) and a connecting tube (7), which together form the inner tube (2).

4. A process for producing a flexible tubular structure according to Claim 3, characterised in that the inner covering (6) and the connecting tube (7) have substantially the same thickness, the multilayer film of micrometric thickness being disposed in the vicinity of the half-thickness of the inner tube (2).

5. A flexible tubular structure produced in accordance with the process according to Claim 1, characterised in that the multilayer film of micrometric thickness forming the sealing barrier (5) is constituted by at least one barrier film (9) performing the sealing function and at least one contact film (10) performing the function of connection with said barrier film (9) on the one hand and with the constituent elements of the flexible tubular structure surrounding it, on the other hand.

6. A flexible tubular structure according to Claim 5, characterised in that the multilayer film of micrometric thickness forming the sealing barrier (5) is constituted by a barrier film (9) associated with a contact film (10).

7. A flexible tubular structure according to Claim 5, characterised in that the multilayer film of micrometric thickness forming the sealing barrier (5) is constituted by a barrier film (9) sandwiched between two contact films (10).

8. A flexible tubular structure according to one of Claims 5 to 7, characterised in that the thickness of the barrier film (9) is comprised between 10 and 30 microns, that of the contact film (10) being comprised between 3 and 5 microns.

9. A flexible tubular structure according to one of Claims 5 to 8, characterised in that the barrier film (9) consists of polyethylene terephthalate, the contact film (10) being made of polyvinylidene chloride.

10. A flexible tube for conveying liquid or gaseous fluids comprising a sealing barrier (5) or (5'), constituted by a multilayer polymeric film of micrometric thickness, characterised in that said flexible tube has a structure in accordance with one of Claims 5 to 9.

11. A compensating expansion sleeve for industrial pipelines comprising a sealing barrier (5) or (5'), constituted by a multilayer polymeric film of micrometric thickness, characterised in that said compensating expansion sleeve has a structure in accordance with one of Claims 5 to 9.

## Patentansprüche

1. Verfahren zum Herstellen einer weichen, rohrförmigen Struktur, welche aus einem Innenrohr (2), gegebenenfalls einer Verstärkungsarmierung (3) und einer Ummantelung (4) zusammengesetzt ist und welche unter anderem eine Dichtungsbarriere (5), (5') gegen beförderte Fluids oder gegen äußere, aggressive Substanzen umfaßt, welche Dichtungsbarriere (5), (5') aus einem mehrschichtigen, polymeren Film mit einer mikrometrischen Dicke zwischen 15 und 40 µm gebildet wird und welche in kontinuierlicher Weise der Länge nach in Form eines Bandes angeordnet wird, um eine Hülle zu bilden, wobei die Überlappung der Bahnen (8) parallel zu den Erzeugenden der weichen, rohrförmigen Struktur ist, wobei der mehrschichtige Film mit mikrometrischer Dicke mit sich selbst versiegelbar ausgebildet wird, wobei sein Verschluß durch das dichte Übereinanderlegen seiner Flächen an der Oberfläche der Ummantelung sichergestellt wird und wobei die Überlappung der Bahnen (8) über eine Umfangslänge zumindest gleich dem Wert des Nenndurchmessers der weichen, rohrförmigen Struktur ist und im wesentlichen gleich dem Zweihundertfachen der Dicke des mehrschichtigen Film mit mikrometrischer Dicke ausgeführt wird, wobei durch eine einzige thermische Endbehandlung die innige Verbindung aller die weiche, rohrförmige Struktur bildenden Elemente sichergestellt wird.

2. Verfahren zum Herstellen einer weichen, rohrförmigen Struktur nach Anspruch 1, dadurch gekennzeichnet, daß der mehrschichtige Film mit mikrometrischer Dicke, welcher eine Dichtungsbarriere (5') bildet, kontinuierlich auf der freien Oberfläche des Innenrohres (2) angeordnet wird, wobei dadurch der Barrierefilm (9) des mehrschichtigen Films mit mikrometrischer Dichte die Innenauskleidung (6) der weichen, rohrförmigen Struktur bildet.

3. Verfahren zum Herstellen einer weichen, rohrförmigen Struktur nach Anspruch 1, dadurch gekennzeichnet, daß der mehrschichtige Film mit mikrometrischer Dicke kontinuierlich zwischen einer Innenauskleidung (6) und einem Verbindungsrohr (7) angeordnet wird, deren Gesamtheit das Innenrohr (2) ausbildet.

4. Verfahren zum Herstellen einer weichen, rohrförmigen Struktur nach Anspruch 3, dadurch gekennzeichnet, daß die Innenauskleidung (6) und das Verbindungsrohr (7) im wesentlichen die gleiche Dicke aufweisen, wobei der mehrschichtige Film mit mikrometrischer Dicke im Bereich der halben Dicke des Innenrohres (2) angeordnet wird.

5. Weiche, rohrförmige Struktur, welche in Übereinstimmung mit dem Verfahren nach Anspruch 1 ausgeführt ist, dadurch gekennzeichnet, daß der mehrschichtige Film mit mikrometrischer Dicke, welcher die Dichtungsbarriere (5) bildet, zumindest aus einem Barrierefilm (9), welcher die Dichtungsfunktion sicherstellt, und zumindest einem Kontaktfilm (10) ausgebildet ist, welcher die Verbindungsfunktion mit diesem Barrierefilm (9) einerseits und mit den ihn umgebenden, die weiche, rohrförmige Struktur ausbildenden Elementen andererseits sicherstellt.

6. Weiche, rohrförmige Struktur nach Anspruch 5, dadurch gekennzeichnet, daß der mehrschichtige Film mit mikrometrischer Dicke, welcher die Dichtungsbarriere (5) bildet, aus einem Barrierefilm (9) gebildet ist, welcher einem Kontaktfilm (10) zugeordnet ist.

7. Weiche, rohrförmige Struktur nach Anspruch 5, dadurch gekennzeichnet, daß der mehrschichtige Film mit mikrometrischer Dicke, welcher die Dichtungsbarriere (5) bildet, aus einem Barrierefilm (9) gebildet ist, welcher sandwichartig zwischen zwei Kontaktfilmen (10) angeordnet ist.

8. Weiche, rohrförmige Struktur nach einem der Ansprüche 5 bis 7, dadurch gekennzeichnet, daß die Dicke des Barrierefilms (9) zwischen 10 und 30 µm liegt, wobei jene des Kontaktfilms (10) zwischen 3 und 5 µm liegt.

9. Weiche, rohrförmige Struktur nach einem der Ansprüche 5 bis 8, dadurch gekennzeichnet, daß der Barrierefilm (9) aus Polyethylenterephthalat gebildet ist, wobei der Kontaktfilm (10) aus Polyvinylidenchlorid hergestellt ist.

10. Weiches Rohr für den Transport von flüssigen oder gasförmigen Fluiden, umfassend eine Dichtungsbarriere (5) oder (5'), bestehend aus einem mehrschichtigen, polymeren Film mit mikrometrischer Dicke, dadurch gekennzeichnet, daß das weiche Rohr eine Struktur entsprechend einem der Ansprüche 5 bis 9 aufweist.

11. Muffe zur Kompensation der Dilatation für industrielle Kanalisationen, umfassend eine Dichtungsbarriere (5) oder (5'), bestehend aus einem mehrschichtigen, polymeren Film mit mikrometrischer Dicke, dadurch gekennzeichnet, daß die Muffe zur Kompensation der Dilatation eine Struktur entsprechend einem der Ansprüche 5 bis 9 aufweist.
